# EUROPEAN PATENT SPECIFICATION

(11) **EP 3 846 534 B1**
(45) Date of publication and mention of the grant of the patent: **05.06.2024**
(21) Application number: 18932234.0
(22) Date of filing: 18.12.2018
(51) Int. Cl.: H04W 8/18, H04W 60/00, H04W 8/20

(54) **CONNECTION MANAGEMENT SYSTEM FOR ELECTRONIC SIM CARD TERMINAL**
VERBINDUNGSVERWALTUNGSSYSTEM FÜR ANSCHLUSS EINER ELEKTRONISCHEN SIM-KARTE
SYSTÈME DE GESTION DE CONNEXION POUR TERMINAL DE CARTE SIM ÉLECTRONIQUE

(30) Priority: 27.08.2018 CN 201810981011
(43) Date of publication of application: 07.07.2021
(73) Proprietor: Shenzhen Jetlink Technology Co., Ltd, Shenzhen, Guangdong 518052 (CN)
(72) Inventor: JIANG, Ming, Shenzhen, Guangdong 518052 (CN)
(74) Representative: Ström & Gulliksson AB
(86) International application number: PCT/CN2018/121674
(87) International publication number: WO 2020/042447

(56) References cited:
- EP-A1- 3 358 871
- CN-A- 104 640 101
- CN-A- 105 916 134
- CN-A- 106 327 172
- CN-A- 106 537 961
- CN-A- 107 835 204
- CN-A- 107 959 951
- US-A1- 2015 349 825
- US-A1- 2016 174 069
- US-A1- 2018 063 668

## Description

### Field of the Invention

The present invention relates to network connection techniques for electronic SIM card terminals, in particular to a connectivity management system for electronic SIM card terminals

### Background of the Invention

Electronic SIM cards can refer to a technique, which does not use traditional pluggable SIM cards, replaces traditional entity SIM cards with software, and replaces the functions of the traditional pluggable SIM cards by downloading electronic cards into terminals (embedded UICCs or software modules) and activate usage of the electronic cards, so as to achieves that mobile terminals can still be connected to a cellular network without using the pluggable SIM cards.

As the SIM cards for trans-regional mobile communication products need to be built in terminals in the form of embedded UICCs during manufacturing, the connectivity of the terminals to the cellular network and applications based on the cellular network such as remote diagnosis and personal entertainment need to be tested in the production test. After being sold in a certain region, the SIM cards should be switched to profiles of the local operator in this region, so that by adoption of the embedded SIM (eSIM) technique, another operator can be selected according to the corresponding nation, region, user preferences and network deployment and an operator profile corresponding to this operator can be downloaded to the embedded UICCs on the terminals when or after the mobile communication products are sold to terminal users, and then the operator profile is activated to be used.

The International Standard Organization GSMA defines two eSIM remote management technical standards for the implementation of remote management of electronic cards: the first technical standard is SGP.01/02 which is an M2M-oriented embedded UICC cards remote management technique and establishes a top-down background-triggered remote management technique based on embedded UICCs in which a preset unique operator profile is built in each embedded UICC and binds with a specified server; the second technical standard is SGP.21/22 which is a consumer electronics-oriented SIM remote management technique and establishes a bottom-up terminal-triggered eSIM remote management technique.

These two eSIM remote management technical standards mentioned above both have certain drawbacks, in particular:

The first technical standard SGP.01/02 defines the preset operator profile, but as such preset operator profile means a unique preset number, the following problems may be caused:
(1) There are a huge number of Internet of Things terminals, so severe number waste (IMSI, MSISDN and ICCD) will be caused by presetting one independent activated operator profile in each card or terminal.
(2) In order to preset a unique available number in a terminal or card production line, the workload on the production line is increased, and the production cost is also increased.
(3) These numbers need to be activated, which means that these numbers should be put into operation on the network side to ensure that terminals preset with these numbers can be connected to the cellular network; the operators providing these preset numbers calculate the cost of network equipment according to the number of activated users and the user capacity, the cost of the operators will be increased with the increase of the number of the preset activated numbers, and the extra cost will be transferred to downstream consumers using these preset numbers.
(4) The preset number defined by SGP.01/02 needs to bind with a certain SM-SR (eSIM platform), which affects the flexibility.

The second technical standard SGP.21/22 does not yet clearly define the technical scheme of presetting operator profiles.

The two standards only define the eSIM remote management function and can achieve the electronic cards function only on embedded UICCs, but none of the two standards provides a mobile connectivity management service oriented to mobile communication terminals and applications, in particular defines a mobile connectivity management service oriented to mobile communication terminals and applications having global connectivity requirements.

US 2015/0349825 A1 discloses a method for selecting a specific provisioning profile from among a plurality of provisioning profiles, and an apparatus using the same. In a terminal to which an embedded UICC (eUICC) is mounted, the eUICC includes at least one provisioning profile wherein each of the one or more provisioning profiles enables a user terminal to communicate with a subscriber management entity supporting at least one network provider.

EP 3 358 871 A1 discloses a method for an eUICC embedded into a machine type communication device to trigger the download of a subscription profile from a first network operator, the eUICC being provisioned with an eUICC identifier (EID) and a pre-loaded data set memorizing a range of International Mobile Subscription Identifiers (IMSI) associated to a second network operator.

### Summary of the Invention

The objective of embodiments of the present invention is to provide a connectivity management system for electronic SIM card terminals, a user terminal and an application so as to provide connectivity as a service (CaaS) for applications having the requirement to connect to the global cellular network.

In order to achieve the above objective, the present invention provides a connectivity management system for electronic SIM card terminals, comprising: a connectivity management module, used to randomly select one preset operator Profile X from a plurality of pre-stored preset operator profiles; a baseband processing module, used to establish a temporary connection channel between the connectivity management module and a cellular network via the Profile X; and a connectivity management server module, wherein the connectivity management module applies for a local operator Profile A to the connectivity management server module and downloads the local operator Profile A from the connectivity management server module via the temporary connection channel; and wherein the baseband processing module establishs a cellular data connection channel with the cellular network via the Profile A. The baseband processing module is further used to send a feedback message to the connectivity management module under the condition that the temporary connection channel is established; and the connectivity management module is further used to start to timing when selecting the Profile X and to select another Profile X under the condition that the feedback message from the baseband processing module is still not received when the timing time exceeds a third preset time. Preferably, the system further comprises a terminal application module, used to access an application server via the cellular data connection channel.

Preferably, the baseband processing module establishes a cellular data connection channel with the cellular network via the Profile A, which comprises: informing, by the connectivity management module, the baseband processing module of attaching to the network via the Profile A after the Profile A is downloaded; and under the condition that the baseband processing module successfully attaches to the network via the Profile A, sending, by the connectivity management module, a Profile A activation and usage message to the connectivity management server module to inform the connectivity management server module that the baseband processing module has attached to the network via the Profile A, so as to establish the cellular data connection channel.

Preferably, the connectivity management server module is further used to switch the network state after receiving the Profile A activation and usage message and to send an activation confirmation message to the connectivity management module after switching the network state; the connectivity management module is further used to start to timing when sending the Profile A activation and usage message to the connectivity management server module, and to download another Profile A under the condition that the activation confirmation message from the connectivity management server module is still not received when the timing time exceeds a first preset time.

Preferably, the connectivity management module is further used to start to timing when selecting the Profile X, and to select another Profile X under the condition that the activation confirmation message from the connectivity management server module is still not received when the timing time exceeds a second preset time.

Preferably, the system further comprises: an operator charging module, used to calculate a traffic of the terminal application module accessing the application server.

Preferably, the connectivity management server module is further used to send a traffic application message to the operator charging module before sending an activation confirmation message to the connectivity management module; wherein, the operator charging module allocates a first traffic according to the traffic application message and sends an allocation feedback message to the connectivity management server module, and the connectivity management server module sends the activation confirmation message to the connectivity management module according to the allocation feedback message.

Preferably, the operator charging module is further used to send a notification to be used up to the connectivity management module via the connectivity management server under the condition of calculating that the difference between a consumed traffic and the first traffic is smaller than a preset traffic threshold.

Preferably, the connectivity management module is further used to forward the notification to be used up to the terminal application module so as to apply for a second traffic or to deactivate the Profile A according to a usage feedback message from the terminal application module.

Preferably, the first traffic and the second traffic comprise time and/or flow.

Preferably, the electronic SIM cards comprise a virtual SIM card and an embedded SIM card.

According to the technical solution, the connectivity management module randomly selects a preset operator profile, and if the selected preset operator profile is available, the connectivity management module is permitted to download a local operator profile from the connectivity management server module so as to establish a cellular data connection channel with the connectivity management server module via the local operator profile. Compared with the technique that one unique operator profile is preset in each terminal, the cost of the operator profiles is reduced, the capability of connecting the terminals with the global cellular data is improved, and the technical solution is very practical for the terminals.

Other features and advantages of the embodiments of the present invention are expounded in detail in the subsequent specific implementation of the invention.

### Brief Description of Drawings

The accompanying drawings are provided for a better understanding of the embodiments of the present invention, belong to one part of the description and are used to explain the embodiments of the present invention together with the following specific implementation, but these accompanying drawings are not intended to limit the embodiments of the present invention. In which:
FIG. 1 is a block diagram illustrating a connectivity management system for electronic SIM card terminals provided by the present invention.
FIG. 2 is a diagram illustrating the message interaction in the connection activating process provided by the present invention;
FIG. 3 is a diagram illustrating the message transmission of a notification to be used up provided by the present invention;
FIG. 4 is a diagram illustrating the transmission of a message of continuing to use provided by the present invention; FIG. 5 is a diagram illustrating the transmission of a message of usage completion provided by the present invention; and
FIG. 6 is a flow diagram of the connection activating process provided by the present invention.

### Detailed Description of the Embodiments

The specific implementations of embodiments of the present invention will be expounded below with reference to the accompanying drawings. It should be understood that the specific implementations described herein are only used to illustrate and explain the embodiments of the present invention, but is not intended to limit the embodiments of the present invention.

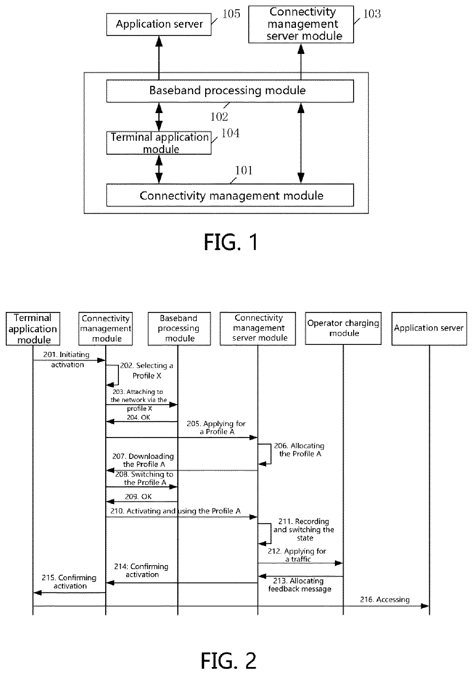

FIG. 1 is a block diagram illustrating a connectivity management system for electronic SIM card terminals provided by the present invention. As shown in FIG. 1, the connectivity management system for electronic SIM card terminals comprises a connectivity management module 101, a baseband processing module 102 and a connectivity management server module 103. The connectivity management module 101 is used to randomly select one preset operator Profile X from a plurality of pre-stored preset operator profiles (Profile for short). The baseband processing module 102 is used to establish a temporary connection channel between the connectivity management module 101 and a cellular network via the Profile X. The connectivity management module 101 applies for a local operator Profile A to the connectivity management server module 103 and then downloads the local operator Profile A from the connectivity management server module 103 via the temporary connection channel, wherein the baseband processing module 102 establishes a cellular data connection channel with the cellular network via the Profile A.

A plurality of preset operator profiles are stored in the connectivity management module 101, for instance, n preset operator profiles, namely preset Profile 1, preset Profile 2, ..., and preset Profile n. These preset operator profiles are pre-written when user terminals are produced or applications are generated, and the technique for writing the preset operator profiles is common knowledge in the art and will not be detailedly described herein. The above preset operator profiles can log in to the cellular network globally, namely these preset operator profiles have signed data roaming. The technique for global roaming signing of the operator profiles is common knowledge in the art and will not be detailedly described herein. What needs to be pointed out is that because it incurs cost to preset the operator profiles and the number of the preset operator profiles is limited, the number of the preset operator profiles is smaller than the total number of produced user terminals, for instance, it is possible that only 50 preset operator profiles need to be preset for 10,000 user terminals. In other words, unlike the prior art, one terminal does not need to correspond to one preset operator profile anymore, and the connectivity management module 101 of any one of the 10,000 terminals can randomly select one preset operator profile from the 50 preset operator profiles when needed. In the present invention, the preset operator profile randomly selected is marked as Profile X.

When a user terminal is turned on or a terminal application initializes a request to activate a mobile communication network, the connectivity management module 101 selects a Profile X and then informs the baseband processing module 102 of attaching to the network via this selected Profile X, the baseband processing module 102 then attaches to the network via the Profile X by following the instruction to establish a temporary connection channel via the Profile X, and then the connectivity management module 101 is permitted to apply for a local Profile to the connectivity management server module 103 and downloads the local Profile from the connectivity management server module 103 via the temporary connection channel. Particularly, after attaching to the network via the Profile X, the baseband processing module 102 sends a feedback message (such as OK) indicating that the temporary connection channel has been successfully established, to the connectivity management module 101, and then the connectivity management module 101 can apply for the local Profile to the connectivity management server module 103 and download the local Profile from the connectivity management server module 103. In the present invention, the local Profile is marked as Profile A. It should be understood that the cellular data connection channel established by the baseband processing module 102 with the cellular network via the Profile A is actually a cellular data connection channel established between the terminal side and the cellular network.

The specific process for the connectivity management module 101 to download the Profile A is as follows: the connectivity management module 101 sends a request to apply for a Profile A to the connectivity management server module 103, the connectivity management server module 103 allocates the Profile A according to the request to apply for the Profile A and sends the allocated Profile A to the connectivity management module 101. It should be understood that the connectivity management module 101 applies for a Profile A to the connectivity management server module 103 and downloads the Profile A from the connectivity management server module 103 via the temporary connection channel.

As shown in FIG. 1, the connectivity management system for electronic SIM card terminals according to the present invention can further comprise a terminal application module 104 used to access an application server 105 via the cellular data connection channel.

Those skilled in the art would appreciate that the ultimate aim of establishing a connection between the connectivity management module 101 and the connectivity management server module 103 is to establish a connection between a terminal application and the application server 105 so that the terminal application can access the application server 105. The terminal application module 104 accesses the application server 105 via the cellular data connection channel, actually via the baseband processing module 102.

In FIG. 1, the connectivity management module 101, the baseband processing module 102 and the terminal application module 104 are located on the terminal side.

The baseband processing module 102 establishes the cellular data connection channel with the cellular network via the Profile A, which comprises: informing, by the connectivity management module 101, the baseband processing module 102 of attaching to the network via the Profile A after the Profile A is downloaded, and then establishing the cellular data connection channel under the condition that the baseband processing module 102 successfully attaches to the network via the Profile A, wherein the connectivity management module 101 is further used to send a Profile A activation and usage message to the connectivity management server module 103 to inform the connectivity management server module 103 that the baseband processing module 102 has attached to the network via the Profile A. The specific process for the baseband processing module 102 to establish the cellular data connection channel with the cellular network via the Profile A is as follows: after downloading the Profile A, the connectivity management module 101 informs the baseband processing module 102 that the operator profile for attaching to the network switches from the Profile X to the Profile A; and after successfully attaching to the network via the Profile A, the baseband processing module 102 sends a successful switching feedback message to the connectivity management module 101 so as to establish the cellular data connection channel. After receiving the successful switching feedback message, the connectivity management module 101 sends a Profile A activation and usage message to the connectivity management server module 103 to inform the connectivity management server module 103 that the baseband processing module has attached to the network via the Profile A, the connectivity management server module 103 records the situation and switches the network state and then sends an activation confirmation message to the connectivity management module 101, and then, communication with the connectivity management server module is realized.

The connectivity management system for electronic SIM card terminals according to the present invention can further comprise an operator charging module (not shown in FIG. 1) used to calculate the traffic of the terminal application module 104 accessing the application server 105.

The connectivity management server module 103 is also used to send a traffic application message to the operator charging module before sending the activation confirmation message to the connectivity management module 101, wherein the operator charging module allocates a first traffic according to the traffic application message and sends an allocation feedback message to the connectivity management server module 103, and the connectivity management server module 103 sends the activation confirmation message to the connectivity management module 101 according to the allocation feedback message.

Namely, only when the traffic is successfully applied by the connectivity management server module 103, will the activation confirmation message be sent to the connectivity management module 101. The allocation feedback message is actually used to inform the connectivity management server module 103 that the operator charging module has allocated the first traffic for it. The first traffic can be time (such as 12 hours) or flow (such as 200M).

FIG. 2 is a diagram illustrating the message interaction in the connection activating process provided by the present invention. As shown in FIG. 2, the message interaction process for activating the connection is as follows:
201. the terminal application module initializes activation to the connectivity management module;
202. the connectivity management module randomly selects one preset operator Profile X from a plurality of pre-stored preset operator profiles and activates the Profile X;
203. the connectivity management module informs the baseband processing module of attaching to the network via the Profile X;
204. the baseband processing module attaches to the network via the Profile X, opens the data channel and feeds OK back to the connectivity management module in the case of successfully attaching to the network; at this point, the temporary connection channel between the connectivity management module and the cellular network is established; 205. the connectivity management module applies for a local Profile A to the connectivity management server via the temporary connection channel according to an application message, wherein the application message contains the position, model, and identification of a terminal;
206. the connectivity management server module allocates a Profile A according to the application message in 205; 207. the connectivity management module downloads the Profile A from the connectivity management server module; wherein the downloading process here can be achieved through various eSIM download techniques such as SGP.01/02, SGP.21/22, or a private SIM download technique;
208. the connectivity management module informs the baseband processing module that the operator profile for attaching to the network switches from the Profile X to the Profile A;
209. The baseband processing module attaches to the network via the Profile A and feeds OK back to the connectivity management module in the case of successfully attaching to the network to indicate that the baseband processing module has successfully attached to the network via the Profile A;
210. the connectivity management module sends the Profile A activation and usage message to the connectivity management server module to inform the connectivity management server module that the baseband processing module has attached to the network via the Profile A, namely, the connectivity management module informs the connectivity management server module that the baseband processing module has attached to the network via the Profile A;
211. the connectivity management server module records and switches the network state;
212. the connectivity management server module applies for a traffic to the operator charging module;
213. the operator charging module allocates the first traffic and feeds an allocation feedback message back to the connectivity management server module;
214. the connectivity management server module sends an activation confirmation message to the connectivity management module;
215. the connectivity management module feeds the activation confirmation message back to the terminal application module;
216. the terminal application module accesses the application server via the established cellular data connection channel.

The process for the terminal application to access the application server by activating the connection is described above, and a preferred embodiment of the present invention is expounded below.

The connectivity management server module in the present invention is also used to switch the network state after receiving the Profile A activation and usage message, and to send the activation confirmation message to the connectivity management module after switching the network state. The connectivity management module is also used to start to timing when sending the Profile A activation and usage message to the connectivity management server module and download another Profile A under the condition that the activation confirmation message from the connectivity management server module is still not received when the timing time exceeds a first preset time.

As shown in FIG. 2, timing is started at 210, if the connectivity management server module still does not send the activation confirmation message (214 in FIG. 2) to the connectivity management module when the timing time from the timing at 210 exceeds a first preset time, it is indicated that the current Profile A is unavailable, and the connectivity management module downloads another Profile A from the connectivity management server module. Those skilled in the art would appreciate that the connectivity management server module can also send a non-activation confirmation message to the connectivity management module if the current Profile A is unavailable so that the connectivity management module can download another Profile A from the connectivity management server module.

The connectivity management module in the present invention is also used to start to timing when selecting the Profile X, and select another Profile X under the condition that the activation confirmation message from the connectivity management server module is still not received when the timing time exceeds a second preset time.

As shown in FIG. 2, timing is started at 202, if the connectivity management server module still does not send the activation confirmation message to the connectivity management module (214 in FIG. 2) when the timing time from the timing at 202 exceeds a second preset time, it indicates that the baseband processing module cannot attach to the network via the current Profile X, and the connectivity management module selects another Profile X.

The connectivity management module in the present invention is also used to start to timing when selecting the Profile X, and select another Profile X under the condition that the feedback message from the baseband processing module is still not received when the timing time exceeds a third preset time.

As shown in FIG. 2, timing is started at 202, if the baseband processing module still does not send the feedback message to the connectivity management module (204 in FIG. 2) when the timing time from the timing at 202 exceeds a third preset time, it is indicated that the baseband processing module cannot attach to the network via the current Profile X, and the connectivity management module selects another Profile X.

The operator charging module in the present invention is also used to send a notification to be used up to the connectivity management module through the connectivity management server module under the condition of calculating that the difference between the consumed traffic and the first traffic is smaller than a preset traffic threshold.

The first traffic herein includes, for instance, time and/or flow, and the preset traffic threshold corresponding to the time is a time threshold and the preset traffic threshold corresponding to the flow is a flow threshold. The time allocated by the operator charging module can be, for instance, 12 hours, and the flow allocated by the operator charging module can be, for instance, 200M. In this example, assuming that the time threshold is 0.5 hours and the flow threshold is 10M, the operator charging module sends a notification to be used up to the connectivity management module through the connectivity management server when the online time reaches 11.5 hours (0.5 hours is left) or the flow of 190M is used (10M is left). Of course, it is also possible that the flow of 190M is used and the online time reaches 11.5 hours.

The connectivity management module in the present invention is also used to forward the notification to be used up to the terminal application module so as to apply for a second traffic or to deactivate the Profile A according to the usage feedback message from the terminal application module.

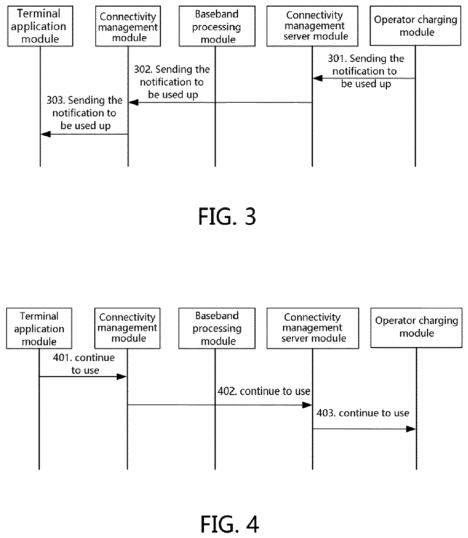

FIG. 3 is a diagram illustrating the message transmission of the notification to be used up provided by the present invention. As shown in FIG. 3, the notification to be used up is sent to the connectivity management server module by the operator charging module (301), then is sent to the connectivity management module by the connectivity management server module (302) and is finally sent to the terminal application module from the connectivity management module (303).

The usage feedback message from the terminal application module can be a message of continuing to use or a message of usage completion, wherein the message of continuing to use indicates that the terminal application module still needs to continue to access the application server after the first traffic is used up, and the message of usage completion indicates that the terminal application module does not need to continue to access the application server.

FIG. 4 is a diagram illustrating the transmission of the message of continuing to use provided by the present invention. As shown in FIG. 4, if the terminal application module intends to continue to access the application server after the first traffic is used up, the usage feedback message of continuing to use is fed back to the connectivity management module (401), then the connectivity management module sends the usage feedback message of continuing to use to the connectivity management server module (402), and the connectivity management server module forwards the usage feedback message of continuing to use to the operator charging module (403) to apply for the second traffic. Those skilled in the art would appreciate that information of the second traffic should be contained in the usage feedback message of continuing to use. Similar to the first traffic, the second traffic can also include time and/or flow, and the subsequent process (for instance, when to send the notification to be used up) is similar to that of the first traffic. The time in the second traffic can be identical with or different from that of the first traffic, and the flow in the second traffic can be identical with or different from that of the first traffic.

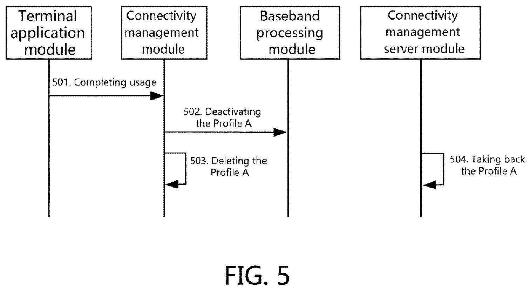

FIG. 5 is a diagram illustrating the transmission of the message of usage completion provided by the present invention As shown in FIG. 5, if the terminal application module does not need to continue to access the application server, the usage feedback message of usage completion is sent to the connectivity management module (501), then the connectivity management module informs the baseband processing module of deactivating the Profile A (502), at the same time, the connectivity management module deletes the Profile A (503), and the connectivity management server module (504) takes the Profile A back so as to allocate the Profile A to other terminals or to use the Profile A for other purposes in the subsequent stage.

Furthermore, the connectivity management server module starts to timing when receiving the notification to be used up, and if the timing time exceeds a first preset feedback time, namely, if the connectivity management server module still does not receive the usage feedback message of continuing to use sent by the terminal application through the connectivity management module when the timing time exceeds a first feedback time, the subsequent process is the same as the process of usage completion shown in FIG. 5, namely, it is regarded that usage is completed.

Similarly, the connectivity management module starts to timing when receiving the notification to be used up, and if the timing time exceeds a second preset feedback time, namely, if the connectivity management module still does not receive the usage feedback message of continuing to use sent by the terminal application when the timing time exceeds a second feedback time, the subsequent process is the same as the process of usage completion shown in FIG. 5, and it is regarded that usage is completed.

What needs to be pointed out is that electronic SIM cards described in the present invention comprise virtual SIM cards and embedded SIM cards (i.e. eSIM cards).

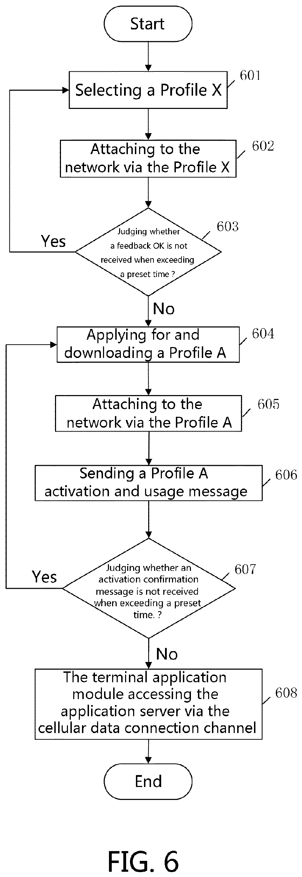

FIG. 6 is a flow diagram of the connection activating process provided by the present invention. As shown in FIG. 6, the connection activating process comprises the following steps:
Step 601, the connectivity management module randomly selects one operator profile, namely Profile X, from a plurality of pre-stored operator profiles and activates the Profile X.
Step 602, the baseband processing module attaches to the network via the Profile X obtained in step 601.
Step 603, judge whether a feedback OK is not received when exceeding a preset time. Particularly, the baseband processing module will send the feedback OK to the connectivity management module to indicate successful attaching to the network when attaching to the network is successful in step 602 (namely, the temporary connection channel is established); it can be easily understood that the baseband processing module will not feed any message back to the connectivity management module if attaching to the network is unsuccessful, and in this case, a preset time, namely the second preset time described above, can be set; if the connectivity management module still does not receive the feedback OK when the timing time (as described above, timing is started when the connectivity management module selects the Profile X) exceeds the second preset time, it is indicated that attaching to the network is unsuccessful. In step 603, if the feedback OK is not received when exceeding the second preset time, namely the judgment result is Yes, step 601 is preformed again to select another Profile X; or if the feedback OK is received within the second preset time, namely the judgment result is No, step 604 is performed.
Step 604, the connectivity management module applies for a Profile A to the connectivity management server module and then downloads the Profile A from the connectivity management server module.
Step 605, the baseband processing module attaches to the network via the Profile A and sends a feedback message to the connectivity management module under the condition of successfully attaching to the network.
Step 606, if the connectivity management module receives the feedback message indicating that the baseband processing module successfully attaches to the network via the Profile A, the connectivity management module sends a Profile A activation and usage message to the connectivity management server module to inform the connectivity management server module that the baseband processing module has attached to the network via the Profile A, namely the connectivity management module informs the connectivity management server module that the baseband processing module has attached to the network via the Profile A.
Step 607, judge whether an activation confirmation message is not received when exceeding a preset time. Particularly, if the connectivity management server module confirms to activate and use the Profile A, the connectivity management server module will feed the activation confirmation message back to the connectivity management module to instruct that the terminal application module can access the application server via the cellular data connection channel; if the connectivity management server module does not feed the activation confirmation message back to the connectivity management module, it is indicated that the terminal application module cannot access the application server via the cellular data connection channel, and in this case, a preset time, namely the first preset time described above, can be set; if the connectivity management module still does not receive the activation confirmation message when the timing time (as described above, timing is started when the connectivity management module sends the Profile A activation and usage message to the connectivity management server module) exceeds the first preset time, it is indicated that the terminal application module cannot access the application server via the cellular data connection channel. In step 607, if the activation confirmation message is not received when exceeding the first preset time, namely the judgment result is Yes, step 604 is performed again to apply for another Profile A; or if the activation confirmation message is received within the first preset time, namely the judgment result is No, step 608 is performed. Step 608, the terminal application module accesses the application server via the cellular data connection channel. Step 608 is described for making the flow in FIG. 6 clearer, but actually, in step 607, if the connectivity management server module feeds the activation confirmation message back to the connectivity management module, it is indicated that the terminal application module can access the application server via the cellular data connection channel.

The optional implementation of the embodiments of the present invention is detailed above with reference to the accompanying drawings; however, the embodiments of the present invention are not limited to the details of the above implementation, and various simple transformations of the technical solution of the embodiments can be made without deviating from the technical concept of these embodiments, and all these transformations should also fall within the protection scope of the embodiments of the present invention.

The technical solution provided by the present invention has high consistency, is very practical for terminals, is suitable for both intelligent terminals and low-cost modules, and minimizes modifications and customization on the production line. Services fulfilled by the technical solution of the present invention can be loaded to the terminals through the over-the-air mode. The technical solution is also suitable for stock terminals, and preset data can be modified and updated.

The services fulfilled by the technical solution of the present invention are available anytime and anywhere as long as the cellular network is available and the terminals are powered on, and can be accessed by terminals as well as applications on a white list of the terminals. The services fulfilled by the technical solution of the present invention are suitable for any scenes needing temporary reliable connection, such as out-of-the-box, power-on, anti-theft positioning and mobile payment, etc., and the cost for maintaining the preset operator profiles is very low.

The services fulfilled by the technical solution of the present invention are activated by terminal applications using these services, and a corresponding fee is paid by the terminal applications using these services.

Correspondingly, the present invention further provides a user terminal, comprising the connectivity management system for electronic SIM card terminals described above. It should be understood that, under the condition that a cellular data connection channel between the user terminal and the cellular network is established through the connectivity management system for electronic SIM card terminals described above, all applications on the user terminal can log in to the network via the cellular data connection channel.

Correspondingly, the present invention further provides an application, comprising the connectivity management system for electronic SIM card terminals described above. It should be understood that, under the condition that a cellular data connection channel between the user terminal and the cellular network is established through the connectivity management system for electronic SIM card terminals described above, all applications on the user terminal can log in to the network via the cellular data connection channel.

Correspondingly, the present invention further provides an application, comprising the connectivity management system for electronic SIM card terminals described above. It should be understood that, under the condition that a cellular data connection channel between an application and the cellular network is established through the connectivity management system for electronic SIM card terminals described above, the application can log in to the network via the cellular data connection channel. Of course, it can be set that only this application can log in to the network and other applications on the user terminal cannot log in to the network; or it can be set that both this application and other applications on the user terminal can log in to the network.

What needs to be additionally pointed out is that these specific technical features in the above specific implementation can be combined in any proper manners without contradictions. In order to avoid unnecessary repetitions, other possible combinations will not be described herein.

Those skilled in the art would appreciate that all or part of the steps of the method in the above embodiments are implemented through relevant hardware instructed by a program, wherein the program is stored in a storage medium and comprises a plurality of instructions used to instruct a single-chip microcomputer, a chip or a processor to execute all or part of the steps of the method in the embodiments of this application. The aforementioned storage medium includes a USB flash disk, a mobile hard disk, a read-only memory (ROM), a random access memory (RAM), a disk, an optical disk or other media capable of storing program codes.

In addition, combinations of different implementations of the embodiments of the present invention can be made arbitrarily and all these combinations should be regarded as the contents disclosed in the embodiments of the present invention.

## Claims

1. A connectivity management system for electronic SIM card terminals, comprising:
a connectivity management module (101), configured to randomly select one preset operator profile, Profile X, from a plurality of pre-stored preset operator profiles;
a baseband processing module (102), configured to establish a temporary connection channel between the connectivity management module (101) and a cellular network via the operator profile, Profile X; and
a connectivity management server module (103), wherein the connectivity management module (101) is configured to apply for a local operator profile, Profile A, to the connectivity management server module (103) and download the local operator profile, Profile A, from the connectivity management server module (103) via the temporary connection channel;
wherein the baseband processing module (102) is further configured to establish a cellular data connection channel with the cellular network via the local operator profile, Profile A;
wherein the baseband processing module (102) is further configured to send a feedback message to the connectivity management module (101) under the condition that the temporary connection channel is established; and wherein
the connectivity management module (101) is further configured to start timing when selecting the operator profile, Profile X, and to select another operator profile, Profile X, under the condition that the feedback message from the baseband processing module (102) is still not received when the timing time exceeds a third preset time.

2. The connectivity management system according to claim 1, further comprising:
a terminal application module (104), configured to access an application server via the cellular data connection channel.

3. The connectivity management system according to claim 2, wherein:
the connectivity management module (101) is configured to inform the baseband processing module (102) of attaching to the network via the local operator profile, Profile A, after the local operator profile, Profile A, is downloaded; and
the baseband processing module (102) is configured to establish the cellular data connection channel under the condition that the baseband processing module (102) successfully attaches to the network via the local operator profile, Profile A;
wherein, the connectivity management module (101) is further configured to send a Profile A activation and usage message to the connectivity management server module (103) to inform the connectivity management server module (103) that the baseband processing module (102) has attached to the network via the local operator profile, Profile A.

4. The connectivity management system according to claim 3, wherein the connectivity management server module (103) is further configured to switch the network state after receiving the Profile A activation and usage message and to send an activation confirmation message to the connectivity management module (101) after switching the network state;
and wherein the connectivity management module (101) is further configured to start timing when sending the Profile A activation and usage message to the connectivity management server module (103), and to download another local operator profile, Profile A, under the condition that the activation confirmation message from the connectivity management server module (103) is still not received when the timing time exceeds a first preset time.

5. The connectivity management system according to claim 3, wherein the connectivity management module (101) is further configured to start timing when selecting the operator profile, Profile X, and to select another operator profile, Profile X, under the condition that the activation confirmation message from the connectivity management server module (103) is still not received when the timing time exceeds a second preset time.

6. The connectivity management system according to claim 3, further comprising:
an operator charging module, configured to calculate a traffic of the terminal application module (104) accessing the application server.

7. The connectivity management system according to claim 6, wherein the connectivity management server module (103) is further configured to send a traffic application message to the operator charging module before sending an activation confirmation message to the connectivity management module (101); and wherein, the operator charging module is configured to allocate a first traffic according to the traffic application message and sends an allocation feedback message to the connectivity management server module (103); and
wherein the connectivity management server module (103) is configured to send the activation confirmation message to the connectivity management module (101) according to the allocation feedback message.

8. The connectivity management system according to claim 7, wherein the operator charging module is further configured to send a notification to be used up to the connectivity management module (101) via the connectivity management server under the condition of calculating that the difference between a consumed traffic and the first traffic is smaller than a preset traffic threshold.

9. The connectivity management system according to claim 8, wherein the connectivity management module (101) is further configured to forward the notification to be used up to the terminal application module (104) so as to apply for a second traffic or to deactivate the local operator profile, Profile A, according to a usage feedback message from the terminal application module (104).

10. The connectivity management system according to claim 9, wherein the first traffic and the second traffic comprise time and/or flow.

11. The connectivity management system according to any one of claims 1-10, wherein the electronic SIM card terminals comprise a virtual SIM card and an embedded SIM card.

## Patentansprüche

1. Konnektivitätsmanagementsystem für elektronische SIM-Karten-Anschlüsse, das Folgendes umfasst:
ein Konnektivitätsmanagementmodul (101), das konfiguriert ist, ein voreingestelltes Betreiberprofil, Profil X, aus mehreren vorab gespeicherten voreingestellten Betreiberprofilen zufällig zu wählen,
ein Basisbandverarbeitungsmodul (102), das konfiguriert ist, einen vorübergehenden Verbindungskanal zwischen dem Konnektivitätsmanagementmodul (101) und einem zellularen Netz mittels des Betreiberprofils, Profil X, aufzubauen, und
ein Konnektivitätsmanagement-Server-Modul (103), wobei das Konnektivitätsmanagementmodul (101) konfiguriert ist, ein lokales Betreiberprofil, Profil A, beim Konnektivitätsmanagement-Server-Modul (103) zu beantragen und das lokale Betreiberprofil, Profil A, vom Konnektivitätsmanagement-Server-Modul (103) mittels des vorübergehenden Verbindungskanals herunterzuladen,
wobei das Basisbandverarbeitungsmodul (102) ferner konfiguriert ist, einen Mobilfunkdatenverbindungskanal mit dem zellularen Netz mittels des lokalen Betreiberprofils, Profil A, aufzubauen,
das Basisbandverarbeitungsmodul (102) ferner konfiguriert ist, eine Rückkopplungsnachricht zum Konnektivitätsmanagementmodul (101) unter der Bedingung zu senden, dass der vorübergehende Verbindungskanal aufgebaut ist, und
das Konnektivitätsmanagementmodul (101) ferner konfiguriert ist, eine Zeitmessung zu starten, wenn das Betreiberprofil, Profil X, gewählt wird, und ein weiteres Betreiberprofil, Profil X, unter der Bedingung zu wählen, dass die Rückkopplungsnachricht vom Basisbandverarbeitungsmodul (102) immer noch nicht empfangen wurde, wenn die Zeitmessungszeit eine dritte voreingestellte Zeit überschreitet.

2. Konnektivitätsmanagementsystem nach Anspruch 1, das ferner Folgendes umfasst:
ein Endgerätanwendungsmodul (104), das konfiguriert ist, auf einen Anwendungsserver mittels des Mobilfunkdatenverbindungskanals zuzugreifen.

3. Konnektivitätsmanagementsystem nach Anspruch 2, wobei
das Konnektivitätsmanagementmodul (101) konfiguriert ist, das Basisbandverarbeitungsmodul (102) über das Verbinden mit dem Netz mittels des lokalen Betreiberprofils, Profil A, zu informieren, nachdem das lokale Betreiberprofil, Profil A, heruntergeladen worden ist, und
das Basisbandverarbeitungsmodul (102) konfiguriert ist, den Mobilfunkdatenverbindungskanal unter der Bedingung aufzubauen, dass das Basisbandverarbeitungsmodul (102) sich mittels des lokalen Betreiberprofils, Profil A, erfolgreich mit dem Netz verbindet;
wobei das Konnektivitätsmanagementmodul (101) ferner konfiguriert ist, eine Aktivierungs- und Verwendungsnachricht für das Profil A zum Konnektivitätsmanagement-Server-Modul (103) zu senden, um das Konnektivitätsmanagement-Server-Modul (103) zu informieren, dass das Basisbandverarbeitungsmodul (102) sich mittels des lokalen Betreiberprofils, Profil A, mit dem Netz verbunden hat.

4. Konnektivitätsmanagementsystem nach Anspruch 3, wobei das Konnektivitätsmanagement-Server-Modul (103) ferner konfiguriert ist, den Netzzustand nach einem Empfangen der Aktivierungs- und Verwendungsnachricht für das Profil A umzuschalten und nach dem Umschalten des Netzzustands eine Aktivierungsbestätigungsnachricht zum Konnektivitätsmanagementmodul (101) zu senden, und
das Konnektivitätsmanagementmodul (101) ferner konfiguriert ist, eine Zeitmessung zu starten, wenn die Aktivierungs- und Verwendungsnachricht für das Profil A zum Konnektivitätsmanagement-Server-Modul (103) gesendet wird, und ein weiteres lokales Betreiberprofil, Profil A, unter der Bedingung herunterzuladen, dass die Aktivierungsbestätigungsnachricht vom Konnektivitätsmanagement-Server-Modul (103) immer noch nicht empfangen worden ist, wenn die Zeitmessungszeit eine erste voreingestellte Zeit überschreitet.

5. Konnektivitätsmanagementsystem nach Anspruch 3, wobei das Konnektivitätsmanagementmodul (101) ferner konfiguriert ist, eine Zeitmessung zu starten, wenn das Betreiberprofil, Profil X, gewählt wird, und ein weiteres Betreiberprofil, Profil X unter der Bedingung zu wählen, dass die Aktivierungsbestätigungsnachricht vom Konnektivitätsmanagement-Server-Modul (103) immer noch nicht empfangen worden ist, wenn die Zeitmessungszeit eine zweite voreingestellte Zeit überschreitet.

6. Konnektivitätsmanagementsystem nach Anspruch 3, das ferner Folgendes umfasst:
ein Betreibergebührenerfassungsmodul, das konfiguriert ist, einen Verkehr des Endgerätanwendungsmoduls (104), das auf den Anwendungsserver zugreift, zu berechnen.

7. Konnektivitätsmanagementsystem nach Anspruch 6, wobei das Konnektivitätsmanagement-Server-Modul (103) ferner konfiguriert ist, vor dem Senden einer Aktivierungsbestätigungsnachricht eine Verkehrsanwendungsnachricht zum Betreibergebührenerfassungsmodul zum Konnektivitätsmanagementmodul (101) zu senden,
das Betreibergebührenerfassungsmodul konfiguriert ist, einen ersten Verkehr gemäß der Verkehrsanwendungsnachricht zuzuweisen, und eine Zuweisungsrückkopplungsnachricht zum Konnektivitätsmanagement-Server-Modul (103) sendet; und
das Konnektivitätsmanagement-Server-Modul (103) konfiguriert ist, die Aktivierungsbestätigungsnachricht gemäß der Zuweisungsrückkopplungsnachricht zum Konnektivitätsmanagementmodul (101) zu senden.

8. Konnektivitätsmanagementsystem nach Anspruch 7, wobei das Betreibergebührenerfassungsmodul ferner konfiguriert ist, eine Mitteilung, verbraucht zu sein, unter der Bedingung des Berechnens, dass die Differenz zwischen einem verbrauchten Verkehr und dem ersten Verkehr kleiner als ein voreingestellter Verkehrsschwellenwert ist, mittels des Konnektivitätsmanagement-Servers zum Konnektivitätsmanagementmodul (101) zu senden.

9. Konnektivitätsmanagementsystem nach Anspruch 8, wobei das Konnektivitätsmanagementmodul (101) ferner konfiguriert ist, die Mitteilung, verbraucht zu sein, zum Endgerätanwendungsmodul (104) weiterzuleiten, um gemäß einer Verwendungsrückkopplungsnachricht vom Endgerätanwendungsmodul (104) einen zweiten Verkehr zu beantragen oder das lokale Betreiberprofil, Profil A, zu deaktivieren.

10. Konnektivitätsmanagementsystem nach Anspruch 9, wobei der erste Verkehr und der zweite Verkehr eine Zeit und/oder einen Durchfluss umfassen.

11. Konnektivitätsmanagementsystem nach einem der Ansprüche 1-10, wobei die elektronischen SIM-Karten-Anschlüsse eine virtuelle SIM-Karte und eine eingebettete SIM-Karte umfassen.

## Revendications

1. Système de gestion de connectivité pour terminaux de carte SIM électroniques, comprenant :
un module de gestion de connectivité (101) configuré pour sélectionner de manière aléatoire un profil d'opérateur prédéfini, Profil X, à partir d'une pluralité de profils d'opérateur prédéfinis préalablement stockés ;
un module de traitement de bande de base (102), configuré pour établir un canal de connexion temporaire entre le module de gestion de connectivité (101) et un réseau cellulaire via le profil d'opérateur, Profil X ;
et
un module de serveur de gestion de connectivité (103), dans lequel le module de gestion de connectivité (101) est configuré pour demander un profil d'opérateur local, Profil A, au module de serveur de gestion de connectivité (103) et télécharger le profil d'opérateur local, Profil A, à partir du module de serveur de gestion de connectivité (103) via le canal de connexion temporaire ;
dans lequel le module de traitement de bande de base (102) est configuré en outre pour établir un canal de connexion de données cellulaire avec le réseau cellulaire via le profil d'opérateur local, Profil A ;
dans lequel le module de traitement de bande de base (102) est configuré en outre pour envoyer un message de rétroaction au module de gestion de connectivité (101) à condition que le canal de connexion temporaire soit établi ; et dans lequel
le module de gestion de connectivité (101) est configuré en outre pour démarrer une temporisation lors de la sélection du profil d'opérateur, Profil X, et pour sélectionner un autre profil d'opérateur, Profil X, à condition que le message de rétroaction en provenance du module de traitement de bande de base (102) ne soit pas encore reçu quand le temps de temporisation dépasse un troisième temps prédéfini.

2. Système de gestion de connectivité selon la revendication 1, comprenant en outre :
un module d'application de terminal (104) configuré pour accéder à un serveur d'application via le canal de connexion de données cellulaire.

3. Système de gestion de connectivité selon la revendication 2, dans lequel :
le module de gestion de connectivité (101) est configuré pour informer le module de traitement de bande de base (102) du rattachement au réseau via le profil d'opérateur local, Profil A, après que le profil d'opérateur local, Profil A, est téléchargé ; et
le module de traitement de bande de base (102) est configuré pour établir le canal de connexion de données cellulaire à condition que le module de traitement de bande de base (102) se rattache avec succès au réseau via le profil d'opérateur local, Profil A ;
dans lequel le module de gestion de connectivité (101) est configuré en outre pour envoyer un message d'activation de Profil A et d'utilisation au module de serveur de gestion de connectivité (103) pour informer le module de serveur de gestion de connectivité (103) que le module de traitement de bande de base (102) s'est rattaché au réseau via le profil d'opérateur local, Profil A.

4. Système de gestion de connectivité selon la revendication 3, dans lequel le module de serveur de gestion de connectivité (103) est configuré en outre pour commuter l'état de réseau après la réception du message d'activation de Profil A et d'utilisation et pour envoyer un message de confirmation d'activation au module de gestion de connectivité (101) après la commutation de l'état de réseau ;
et dans lequel le module de gestion de connectivité (101) est configuré en outre pour démarrer une temporisation lors de l'envoi du message d'activation de Profil A et d'utilisation au module de serveur de gestion de connectivité (103), et pour télécharger un autre profil d'opérateur local, Profil A, à condition que le message de confirmation d'activation en provenance du module de serveur de gestion de connectivité (103) ne soit pas encore reçu quand le temps de temporisation dépasse un premier temps prédéfini.

5. Système de gestion de connectivité selon la revendication 3, dans lequel le module de gestion de connectivité (101) est configuré en outre pour démarrer une temporisation lors de la sélection du profil d'opérateur, Profil X, et pour sélectionner un autre profil d'opérateur, Profil X, à condition que le message de confirmation d'activation en provenance du module de serveur de gestion de connectivité (103) ne soit pas encore reçu quand le temps de temporisation dépasse un deuxième temps prédéfini.

6. Système de gestion de connectivité selon la revendication 3, comprenant en outre :
un module de tarification d'opérateur configuré pour calculer un trafic du module d'application de terminal (104) accédant au serveur d'application.

7. Système de gestion de connectivité selon la revendication 6, dans lequel le module de serveur de gestion de connectivité (103) est configuré en outre pour en voyer un message d'application de trafic au module de tarification d'opérateur avant l'envoi d'un message de confirmation d'activation au module de gestion de connectivité (101) ; et
dans lequel le module de tarification d'opérateur est configuré pour attribuer un premier trafic en fonction du message d'application de trafic et envoie un message de rétroaction d'attribution au module de serveur de gestion de connectivité (103) ; et
dans lequel le module de serveur de gestion de connectivité (103) est configuré pour envoyer le message de confirmation d'activation au module de gestion de connectivité (101) en fonction du message de rétroaction d'attribution.

8. Système de gestion de connectivité selon la revendication 7, dans lequel le module de tarification d'opérateur est configuré en outre pour envoyer une notification à utiliser au module de gestion de connectivité (101) via le serveur de gestion de connectivité à condition de calculer que la différence entre un trafic consommé et le premier trafic est inférieure à un seuil de trafic prédéfini.

9. Système de gestion de connectivité selon la revendication 8, dans lequel le module de gestion de connectivité (101) est configuré en outre pour transférer la notification à utiliser au module d'application de terminal (104) de manière à demander un second trafic ou pour désactiver le profil d'opérateur local, Profil A, en fonction d'un message de rétroaction d'utilisation en provenance du module d'application de terminal (104).

10. Système de gestion de connectivité selon la revendication 9, dans lequel le premier trafic et le second trafic comprennent un temps et/ou un flux.

11. Système de gestion de connectivité selon l'une quelconque des revendications 1 à 10, dans lequel les terminaux de carte SIM électroniques comprennent une carte SIM virtuelle et une carte SIM incorporée.
